# FASCICULE DE BREVET EUROPEEN

(11) **EP 3 746 349 B1**
(45) Date de publication et mention de la délivrance du brevet: **26.10.2022**
(21) Numéro de dépôt: 19704663.4
(22) Date de dépôt: 18.01.2019
(51) Int. Cl.: B62D 27/02, B62D 25/02, B62D 25/04

(54) **STRUCTURE DE VEHICULE COMPRENANT UNE PIECE DE RENFORT DE PIED AVANT ET UN LONGERON**
FAHRZEUGSTRUKTUR MIT EINEM VORDEREN SÄULENVERSTÄRKUNGSTEIL UND EINER SEITENSCHIENE
VEHICLE STRUCTURE COMPRISING A FRONT PILLAR REINFORCEMENT PART AND A SIDE RAIL

(30) Priorité: 02.02.2018 FR 1850898
(43) Date de publication de la demande: 09.12.2020
(73) Titulaire: PSA Automobiles SA, 78300 Poissy (FR)
(72) Inventeur: REY, Loïc, 25230 SELONCOURT (FR)
(86) Numéro de dépôt international: PCT/FR2019/050115
(87) Numéro de publication internationale: WO 2019/150014

(56) Documents cités:
- EP-A1- 3 090 923
- DE-U1-202014 009 332
- FR-A1- 2 926 056
- FR-A1- 2 926 777
- JP-A- 2000 108 930

## Description

La présente invention se situe dans le domaine des véhicules et, notamment des véhicules automobiles. L'invention concerne une structure de véhicule comprenant une pièce de renfort de pied et un longeron et, également, un véhicule comprenant une telle structure. L'invention s'adresse en particulier aux structures comprenant une pièce de renfort de pied avant. Généralement, les pieds avant et arrière d'un véhicule sont des montants situés vers l'avant ou l'arrière du côté de caisse, entre un passage de roue et une ouverture de porte. Les pieds ont des géométries différentes, spécifiques à leur lieu d'implantation à l'avant ou à l'arrière du véhicule.

Les renforts de pied avant sont des dispositifs situés au niveau de la jonction entre le pied avant et le longeron d'un véhicule. Leur rôle est de renforcer le pied avant dans l'éventualité d'une collision frontale. Le renfort a généralement une forme coudée en « L ». Il comprend une cavité et des feuillures d'assemblage s'étendant latéralement, autour de ladite cavité. Généralement, il comprend en outre un appui-cric configuré pour maintenir en position un cric pour le levage dudit véhicule lors du changement de la roue adjacente.

Classiquement, l'assemblage d'un renfort de pied avant et d'un longeron s'effectue au moyen des feuillures d'assemblage de chacune des pièces susmentionnées. Néanmoins, un tel assemblage peut mener à des problèmes d'étanchéité lorsque le nombre de feuillures superposées est trop important, par exemple lorsqu'il est supérieur à trois. En effet, le renfort de pied avant est formé par l'assemblage de deux pièces symétriques formant un corps creux. Une extrémité du renfort de pied avant est reçue pour sa fixation dans un longeron. Le longeron peut comprendre également deux pièces en demi-coques formant un corps creux, si bien qu'il peut y avoir localement une superposition de quatre feuillures d'assemblage.

Le document FR 2926777 décrit une structure de véhicule automobile comprenant un pied avant et un longeron fixé au pied avant suivant une jonction au voisinage de laquelle une paroi d'extrémité appartenant au renfort ou au longeron présente une section selon la direction longitudinale du véhicule et ayant une forme arrondie convexe en C. Les parois du renfort sont bordées par des feuillures d'assemblage. En outre, ce document divulgue également une pièce de renfort de pied avant selon le préambule de la revendication 8.

Bien que ce document propose l'utilisation des renforts de pied avant en acier à très haute limite élastique, il a été constaté que leur fabrication par emboutissage ne permettait pas l'emploi d'acier présentant un allongement à la rupture A d'au moins 6% tel que mesuré selon la norme ISO 6892-1:2016, du fait notamment de la forme semi-hémisphérique de l'extrémité horizontale desdites pièces de renforts de pied. En particulier, leur fabrication par emboutissage ne permettait pas l'emploi d'acier présentant un allongement à la rupture A d'au moins 6% tel que mesuré selon la norme ISO 6892-1:2016, et une résistance mécanique Rm d'au moins 1200 MPa telle que mesurée selon la norme ISO 6892-1:2016.

L'allongement à la rupture est une caractéristique des matériaux définissant la capacité d'un matériau à s'allonger avant de rompre lorsqu'il est sollicité en traction. Or l'emploi d'acier présentant un allongement à la rupture A d'au moins 6% tel que mesuré selon la norme ISO 6892-1:2016 une résistance mécanique Rm d'au moins 1200 MPa telle que mesurée selon la norme ISO 6892-1:2016 serait avantageux notamment pour sa résistance aux chocs. Une solution reste donc à trouver pour permettre l'emploi de matériaux présentant de telles caractéristiques mécaniques.

L'invention a pour objectif de pallier à au moins un des inconvénients de l'art antérieur en proposant un nouveau de renfort de pied avant et un nouveau mode de liaison avec le longeron permettant l'emploi de matériau à très haute limite élastique pour la réalisation du renfort de pied.

A cet effet et selon un premier aspect, l'invention a pour objet une structure pour véhicule automobile comprenant une pièce de renfort de pied avant présentant une partie horizontale destinée à s'étendre selon la direction longitudinale du véhicule, montrant une extrémité semi-hémisphérique et un longeron ; la pièce de renfort de pied avant et le longeron se présentant chacun sous forme d'une demi-coque définissant une cavité, ladite pièce et le longeron se superposant au niveau d'une de leurs extrémités, ladite structure étant remarquable en ce que l'extrémité de la pièce de renfort de pied superposée au longeron est dépourvue de feuillures d'assemblage.

De préférence, le longeron est superposé à la pièce de renfort de pied sur tout ou partie de la partie horizontale de la cavité de ladite pièce. De préférence, le longeron est superposé à la pièce de renfort de pied sur la partie horizontale de la cavité de la pièce de renfort de pied, se superposant au moins à son extrémité semi-hémisphérique.

Comme on l'aura compris à la lecture de la définition qui vient d'en être donnée, l'invention propose une nouvelle pièce de renfort de pied avant remarquable en ce que la partie s'étendant horizontalement, et montrant une extrémité semi-hémisphérique, est dépourvue de feuillures d'assemblage. La suppression des feuillures d'assemblage dans cette partie de la pièce rend possible sa fabrication par emboutissage à partir de tôles en acier présentant un allongement à la rupture A d'au moins 6% tel que mesuré selon la norme ISO 6892-1:2016, et de préférence une résistance mécanique Rm d'au moins 1200 MPa telle que mesurée selon la norme ISO 6892-1:2016. De plus, cette configuration permet d'obtenir des pièces ayant une masse inférieure à la masse des renforts de pied selon l'art antérieur, puisque les feuillures de d'assemblage n'entourent pas intégralement le périmètre de la pièce, ou du moins s'étendent sur une partie moins importante du périmètre de la pièce. Cette configuration répond donc aux objectifs actuels d'allégement de la masse globale des véhicules et de diminution des coûts de production.

Selon un mode de réalisation préféré de l'invention, la pièce de renfort de pied avant est fixée au longeron par au moins un moyen de fixation disposé dans la cavité de ladite pièce au niveau de sa partie horizontale.

Ainsi, l'absence de feuillure d'assemblage en extrémité de la pièce de renfort de pied avant ne nuit pas à sa fixation sur ledit longeron. La fixation se fait au niveau de la cavité de ladite pièce et non plus au moyen de ses feuillures d'assemblage comme c'était le cas dans l'art antérieur.

De préférence, la partie horizontale de la cavité de la pièce de renfort de pied avant montrant un fond et des parois latérales, la structure est remarquable en ce que la pièce de renfort de pied avant est fixée au longeron par au moins un moyen de fixation disposé au fond de ladite cavité et/ou par au moins un moyen de fixation disposé sur au moins une paroi latérale de ladite cavité, de préférence le ou les moyens de fixation sont disposés au fond de la cavité.

Avantageusement, au moins un des moyens de fixation est un point de soudure. Ainsi, la pièce de renfort de pied avant est fixée au longeron par une pluralité de points de soudure reliant le fond de sa cavité au fond de la cavité du longeron, et/ou au moins une paroi latérale de sa cavité à au moins une paroi latérale de la cavité du longeron. Alternativement, le moyen de fixation peut être un moyen de collage, d'agrafage, de rivetage ou un système vis-écrou.

Selon une mise en œuvre préférée de l'invention, les cavités de la pièce de renfort de pied avant et du longeron étant au moins en partie bordées par des feuillures d'assemblage, la structure est remarquable en ce que ladite pièce et le longeron sont agencés pour que leurs feuillures d'assemblage respectives soient disposées en continuité les unes par rapport aux autres selon la direction longitudinale du véhicule. De préférence, les feuillures d'assemblage de la pièce de renfort de pied avant et du longeron montrent un écartement les unes par rapport aux autres selon la direction longitudinale.

Cette configuration est avantageuse en ce qu'elle évite aux feuillures du renfort de pied avant et du longeron de se superposer. Ainsi, lorsque la structure est montée dans le véhicule et assemblée avec une pièce de renfort de pied avant symétrique (ou le côté habitacle) et un longeron complémentaire, le nombre de feuillures d'assemblage superposées et soudées entre elles est inférieur à trois. L'invention est remarquable en ce qu'elle apporte en outre une solution aux problèmes d'étanchéité pouvant être rencontrés à cet endroit dans l'art antérieur. Selon un mode de réalisation préféré de l'invention, la pièce de renfort de pied avant est fabriquée en acier à très haute limite élastique présentant un allongement à la rupture A d'au moins 6% tel que mesuré selon la norme ISO 6892-1:2016, de préférence d'au moins 8%. Préférentiellement, la pièce de renfort de pied avant est fabriquée en acier à très haute limite élastique présentant une résistance mécanique Rm d'au moins 1200 MPa telle que mesurée selon la norme ISO 6892-1:2016. De préférence encore, l'acier utilisé présente une résistance mécanique Rm d'au moins 1300 MPa telle que mesurée selon la norme ISO 6892-1:2016. Selon un deuxième aspect, l'invention porte sur un véhicule comprenant une structure de véhicule selon le premier aspect de l'invention. Préférentiellement, la structure de pied est localisée au niveau du montant situé vers l'avant du véhicule, entre le passage des roues avant et une ouverture de porte. Ladite structure peut être localisée aussi bien sur le côté gauche de la caisse que sur le côté droit.

Selon un troisième aspect, l'invention porte sur une pièce de renfort de pied avant se présentant sous forme d'une demi-coque définissant une cavité bordée au moins en partie par des feuillures d'assemblage, ladite pièce de renfort de pied avant montrant une forme générale en « L » de sorte à présenter une partie destinée à s'étendre horizontalement selon la direction longitudinale du véhicule dans lequel elle est destinée à être montée, la partie s'étendant horizontalement, montre une extrémité semi-hémisphérique, et est dépourvue de feuillures d'assemblage et dont l'extrémité est destinée à se superposer avec un longeron, ladite pièce est remarquable en ce que l'extrémité destinée à être superposée au longeron est dépourvue de feuillures d'assemblage.

Selon un mode de réalisation préféré, la pièce de renfort de pied avant est fabriquée en acier à très haute limite élastique présentant un allongement à la rupture A d'au moins 6% tel que mesuré selon la norme ISO 6892-1:2016, de préférence d'au moins 8%. Préférentiellement, la pièce de renfort de pied avant est fabriquée en acier à très haute limite élastique présentant une résistance mécanique Rm d'au moins 1200 MPa telle que mesurée selon la norme ISO 6892-1 :2016. De préférence encore, l'acier utilisé présente une résistance mécanique Rm d'au moins 1300 MPa telle que mesurée selon la norme ISO 6892-1:2016.

Selon un quatrième aspect, l'invention porte sur l'utilisation d'un acier à très haute limite élastique présentant un allongement à la rupture A d'au moins 6% tel que mesuré selon la norme ISO 6892-1:2016, et une résistance mécanique Rm d'au moins 1200 MPa telle que mesurée selon la norme ISO 6892-1:2016, dans un procédé d'emboutissage pour la fabrication d'une pièce de renfort de pied avant selon le troisième aspect de l'invention, ou pour la fabrication d'une pièce de renfort de pied avant d'une structure de véhicule automobile selon le premier aspect de l'invention. De préférence, la pièce de renfort de pied avant se présente sous forme d'une demi-coque définissant une cavité bordée au moins en partie par des feuillures d'assemblage, ladite pièce de renfort de pied avant montrant une forme générale en « L » de sorte à présenter une partie destinée à s'étendre horizontalement selon la direction longitudinale du véhicule dans lequel elle est destinée à être montée, la partie s'étendant horizontalement, montrant une extrémité semi-hémisphérique, et dépourvue de feuillures d'assemblage et est destinée à se superposer avec un longeron, l'extrémité destinée à être superposée au longeron étant dépourvue de feuillures d'assemblage.

L'invention sera bien comprise et d'autres aspects et avantages apparaîtront clairement à la lecture de la description qui suit, donnée à titre d'exemple, en référence aux planches de dessins annexées sur lesquelles :
- La figure 1 est une vue partielle montrant la structure de véhicule selon l'invention comprenant une demi-coque formant une pièce de renfort de pied avant et une demi-coque formant un longeron au niveau de leurs extrémités de liaison ;
- La figure 2 est une vue similaire à celle de la figure 1 montrant le même assemblage selon un autre angle de vue.

Dans la description qui suit, le terme « comprendre » est synonyme de « inclure » et n'est pas limitatif en ce qu'il autorise la présence d'autres éléments dans la structure, le véhicule ou la pièce de renfort de pied avant auquel il fait référence. Il est entendu que le terme « comprendre » inclut les termes « consister en ». Sur les différentes figures, les mêmes références désignent des éléments identiques ou similaires. Les termes « inférieur », « supérieur », « avant », « arrière » s'entendront par rapport à l'orientation générale du véhicule. Le terme « inférieur » indiquera une proximité avec le sol plus importante selon la direction verticale que respectivement le terme « supérieur ». Le terme « avant » indiquera un positionnement orienté vers le devant d'un véhicule selon la direction horizontale et le terme « arrière » indiquera un positionnement orienté vers l'arrière d'un véhicule selon la même direction. Le terme « partie horizontale » définira une partie d'une pièce de véhicule s'étendant entre une extrémité avant et une extrémité arrière de ladite pièce. L'unité de mesure MPa correspond à « Méga Pascals ».

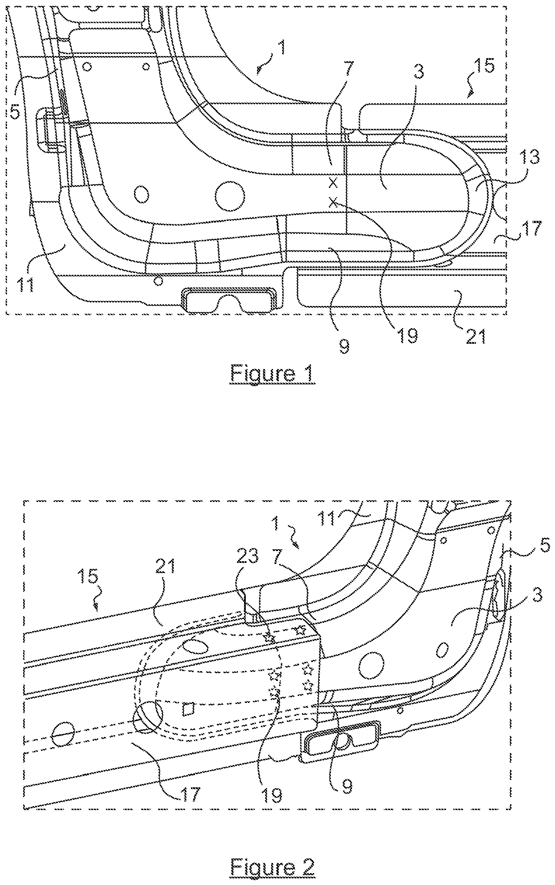

On se référera en premier lieu à la figure 1 montrant partiellement une structure de véhicule selon l'invention comprenant une pièce 1de renfort de pied avant et un longeron 15. La pièce 1 de renfort de pied avant est en une pièce unique formée par emboutissage d'un flan de tôle et se présente sous forme d'une demi-coque destinée à être positionnée en regard d'une autre pièce montrant une deuxième demi-coque de forme symétrique de sorte à former un espace creux. Le corps de la pièce 1 de renfort de pied avant montre une forme générale en « L » définissant donc une partie s'étendant verticalement et une partie s'étendant horizontalement.

La pièce 1 de renfort de pied avant se présente donc sous forme d'une demi-coque formant une cavité 3 comprenant des parois latérales (5, 7, 9, 13) et un fond, et des feuillures d'assemblage 11. Les feuillures d'assemblage 11 forment les rebords des parois latérales et s'étendent latéralement depuis celles-ci. La paroi latérale avant 5 s'étend selon la direction verticale du véhicule et elle est orientée vers la partie avant dudit véhicule. Les parois latérales inférieure 9 et supérieure 7 s'étendent selon la direction horizontale du véhicule et encadrent la partie horizontale du renfort. Lesdites parois latérales (5, 7, 9) sont bordées partiellement par des feuillures d'assemblage 11 destinées à être solidarisées aux autres pièces se trouvant dans l'environnement d'implantation de la pièce de renfort 1 de pied avant. La présence de feuillures d'assemblages 11 sur les parois latérales (5, 7, 9) de la pièce de renfort 1 de pied permet de fixer la pièce 1 de renfort de pied avant à sa pièce complémentaire symétrique dont l'assemblage forme le renfort de pied avant.

La paroi d'extrémité 13 est orientée vers la partie arrière du véhicule et présente une section convexe en C montrant une forme générale semi-hémisphérique. Contrairement aux autres parois latérales (7, 9, 11), la paroi d'extrémité 13 est totalement dépourvue de feuillures d'assemblage. L'avantage de cette configuration est la facilité d'emboutissage de la pièce, notamment dans le cas où cette pièce est confectionnée en acier à très haute limite élastique.

Le longeron 15 possède une section transversale en « U » et comprend une cavité 17 bornée par des feuillures d'assemblage 21 s'étendant latéralement depuis le corps dudit longeron 15.

Les cavités de la pièce 1 de renfort de pied avant et du longeron 15 se superposant sont solidarisées via au moins un moyen de fixation (19, 23). Cette configuration permet d'éviter la nécessité de solidariser les deux pièces au niveau des feuillures d'assemblage, tel que c'est le cas dans l'art antérieur. Ainsi, il devient possible de limiter le nombre d'épaisseurs à souder ensemble à ce niveau.

Les feuillures 11 de la pièce 1 de renfort de pied avant et les feuillures 21 du longeron 15 sont agencées successivement les unes par rapport aux autres selon la direction longitudinale de ladite structure. Avantageusement, lesdites feuillures de la pièce 1 de renfort et celles du longeron sont séparées par un écartement.

Selon l'invention, la pièce 1 de renfort de pied avant est fabriquée en acier à très haute limite élastique présentant un allongement à la rupture A d'au moins 6% tel que mesuré selon la norme ISO 6892-1:2016. De préférence, le matériau dont la pièce 1 de renfort de pied avant est confectionnée présente une résistance à la rupture d'au moins 1200 MPa, de préférence d'au moins 1300 MPa tel que mesuré selon la norme ISO 6892-1:2016.

La figure 2 illustre une vue d'une pièce 1 de renfort de pied avant et un longeron 15, ledit longeron 15 étant solidarisé à ladite pièce 1 par des moyens de fixation (19, 23) placés soit sur les parois latérales inférieure et/ou supérieure (7, 9), soit sur le fond de la cavité 3.

Les moyens de fixation (19, 23) sont situés à l'intérieur de la cavité 3 de la pièce 1 de renfort de pied avant. Préférablement, au moins un de ces moyens de fixation 19 est placé sur le fond de la cavité et/ou au moins un de ces moyens de fixation 23 est placé sur les parois latérales inférieure et/ou supérieure (7, 9) de ladite pièce 1. Plus préférablement encore, lesdits moyens de fixation 19 sont placés sur le fond de la cavité 3. Ceci assure une meilleure rigidité de l'ensemble. Lesdits moyens de fixation (19, 23) sont, de manière préférentielle, des points de soudure.

## Revendications

1. Structure pour véhicule automobile comprenant une pièce (1) de renfort de pied avant présentant une partie horizontale destinée à s'étendre selon la direction longitudinale du véhicule, montrant une extrémité semi-hémisphérique et un longeron (15) ; la pièce (1) de renfort de pied avant et le longeron (15) se présentant chacun sous forme d'une demi-coque définissant une cavité (3, 17), ladite pièce (1) et ledit longeron (15) se superposant au niveau d'une de leurs extrémités, ladite structure étant **caractérisée en ce que** l'extrémité de la pièce (1) de renfort de pied avant superposée au longeron (15) est dépourvue de feuillures d'assemblage.

2. Structure de véhicule selon la revendication 1, **caractérisée en ce que** la pièce (1) de renfort de pied avant est fixée au longeron (15) par au moins un moyen de fixation (19, 23) disposé dans la cavité (3) de ladite pièce (1) au niveau de sa partie horizontale.

3. Structure de véhicule selon la revendication 2, la partie horizontale de la cavité de la pièce (1) de renfort de pied avant montrant un fond et des parois latérales (5, 7, 9), la structure est **caractérisée en ce que** ladite pièce (1) de renfort de pied avant est fixée au longeron (15) par au moins un moyen de fixation (19) disposé au fond de ladite cavité (3) et/ou par au moins un moyen de fixation (23) disposé sur au moins une paroi latérale (5, 7, 9) de ladite cavité (3), de préférence le ou les moyens de fixation (19) sont disposés au fond de la cavité (3).

4. Structure de véhicule selon l'une des revendications 2 ou 3, **caractérisée en ce qu'**au moins un des moyens de fixation (19, 23) est un point de soudure.

5. Structure de véhicule selon l'une des revendications 1 à 4, les cavités (3, 17) de la pièce (1) de renfort de pied avant et du longeron (15) étant au moins en partie bordées par des feuillures d'assemblage (11, 21), la structure est **caractérisée en ce que** ladite pièce (1) et le longeron (15) sont agencés pour que leurs feuillures d'assemblage respectives soient disposées en continuité les unes par rapport aux autres selon la direction longitudinale du véhicule, de préférence les feuillures d'assemblage de la pièce (1) de renfort de pied avant et du longeron (15) montrent un écartement l'une par rapport à l'autre selon la direction longitudinale.

6. Structure de véhicule selon l'une des revendications 1 à 5, **caractérisée en ce que** la pièce (1) de renfort de pied avant est fabriquée en acier à très haute limite élastique présentant un allongement à la rupture A d'au moins 6% tel que mesuré selon la norme ISO 6892-1:2016, et de préférence une résistance mécanique Rm d'au moins 1200 MPa telle que mesurée selon la norme ISO 6892-1:2016.

7. Véhicule **caractérisé en ce qu'**il comprend au moins une structure de véhicule selon l'une des revendications 1 à 6.

8. Pièce (1) de renfort de pied avant se présentant sous forme d'une demi-coque définissant une cavité bordée au moins en partie par des feuillures d'assemblage, ladite pièce (1) de renfort de pied avant montrant une forme générale en « L » de sorte à présenter une partie destinée à s'étendre horizontalement selon la direction longitudinale du véhicule dans lequel elle est destinée à être montée, **caractérisée en ce que** la partie s'étendant horizontalement, montre une extrémité semi-hémisphérique, et est dépourvue de feuillures d'assemblage et est destinée à se superposer avec un longeron, l'extrémité destinée à être superposée au longeron (15) étant dépourvue de feuillures d'assemblage.

9. Pièce (1) de renfort de pied avant selon la revendication 8 **caractérisé en ce qu'**il est fabriqué en acier à très haute limite élastique présentant un allongement à la rupture A d'au moins 6% tel que mesuré selon la norme ISO 6892-1:2016, et de préférence une résistance mécanique Rm d'au moins 1200 MPa telle que mesurée selon la norme ISO 6892-1:2016.

10. Utilisation d'un acier à très haute limite élastique présentant un allongement à la rupture A d'au moins 6% tel que mesuré selon la norme ISO 6892-1:2016, et une résistance mécanique Rm d'au moins 1200 MPa telle que mesurée selon la norme ISO 6892-1:2016, dans un procédé d'emboutissage pour la fabrication d'une pièce (1) de renfort de pied avant selon la revendication 8 ou 9 ou pour la fabrication d'une pièce (1) de renfort de pied avant d'une structure de véhicule automobile selon l'une des revendications 1 à 6 ; de préférence la pièce (1) de renfort de pied avant se présente sous forme d'une demi-coque définissant une cavité bordée au moins en partie par des feuillures d'assemblage, ladite pièce (1) de renfort de pied avant montrant une forme générale en « L » de sorte à présenter une partie destinée à s'étendre horizontalement selon la direction longitudinale du véhicule dans lequel elle est destinée à être montée, , la partie s'étendant horizontalement montrant une extrémité semi-hémisphérique et dépourvue de feuillures d'assemblage et est destinée à se superposer avec un longeron, l'extrémité destinée à être superposée au longeron (15) étant dépourvue de feuillures d'assemblage.

## Patentansprüche

1. Struktur für ein Kraftfahrzeug mit einem vorderen Fußverstärkungsteil (1) mit einem horizontalen Teil, der sich entlang der Längsrichtung des Fahrzeugs erstrecken soll und ein halbkugelförmiges Ende und ein Längselement (15) aufweist; wobei das vordere Fußverstärkungsteil (1) und das Längselement (15) jeweils die Form einer Halbschale aufweisen, die einen Hohlraum (3, 17) definiert, wobei das Teil (1) und das Längselement (15) an einem ihrer Enden übereinander angeordnet sind, wobei die Struktur **dadurch gekennzeichnet ist, dass** das Ende des vorderen Fußverstärkungsteils (1) dem Längselement (15) überlagert ist und frei von einem Falz ist.

2. Fahrzeugaufbau nach Anspruch 1, **dadurch gekennzeichnet, dass** das vordere Fußverstärkungsteil (1) an dem Längsträger (15) durch mindestens ein Befestigungsmittel (19, 23) befestigt ist, das in dem Hohlraum (3) des Teils (1) an seinem horizontalen Teil angeordnet ist.

3. Fahrzeugaufbau nach Anspruch 2, wobei der horizontale Teil des Hohlraums des vorderen Fußverstärkungsteils (1) einen Boden und Seitenwände (5, 7, 9) aufweist, **dadurch gekennzeichnet, dass** der vordere Fußverstärkungsteil (1) an dem Seitenteil (15) durch mindestens ein Befestigungsmittel (19), das am Boden des Hohlraums (3) angeordnet ist, und/oder durch mindestens ein Befestigungsmittel (23), das an mindestens einer Seitenwand (5, 7, 9) des Hohlraums (3) angeordnet ist, befestigt ist, wobei vorzugsweise das Befestigungsmittel (19) am Boden des Hohlraums (3) angeordnet ist.

4. Fahrzeugaufbau nach einem der Ansprüche 2 oder 3, **dadurch gekennzeichnet, dass** mindestens eines der Befestigungsmittel (19, 23) eine Schweißstelle ist.

5. Fahrzeugaufbau nach einem der Ansprüche 1 bis 4, wobei die Hohlräume (3, 17) des vorderen Fußverstärkungsteils (1) und des Längsträgers (15) zumindest teilweise durch Verbindungsstege (11, 21) begrenzt sind, **dadurch gekennzeichnet, dass** der Teil (1) und der Längsträger (15) derart angeordnet sind, dass ihre jeweiligen Verbindungsstege in Fahrzeuglängsrichtung durchgehend zueinander angeordnet sind, wobei vorzugsweise die Verbindungsstege des vorderen Fußverstärkungsteils (1) und des Längsträgers (15) in Längsrichtung einen Abstand voneinander aufweisen.

6. Fahrzeugstruktur nach einem der Ansprüche 1 bis 5, **dadurch gekennzeichnet, dass** das vordere Fußverstärkungsteil (1) aus Stahl mit sehr hoher Streckgrenze mit einer Zugdehnung A von mindestens 6 %, gemessen nach ISO 6892-1:2016, und vorzugsweise einer mechanischen Festigkeit Rm von mindestens 1200 MPa, gemessen nach ISO 6892-1:2016, besteht.

7. Fahrzeug, **dadurch gekennzeichnet, dass** es mindestens eine Fahrzeugstruktur nach einem der Ansprüche 1 bis 6 umfasst.

8. Vorderfußverstärkungsteil (1) in Form einer Halbschale, die einen Hohlraum definiert, der zumindest teilweise durch Verbindungsstege begrenzt ist, wobei das Vorderfußverstärkungsteil (1) im Allgemeinen L-förmig ist, sodass es einen Teil aufweist, der dazu bestimmt ist, sich horizontal in der Längsrichtung des Fahrzeugs zu erstrecken, in der es montiert werden soll, **dadurch gekennzeichnet, dass** der horizontal verlaufende Teil ein halbkugelförmiges Ende aufweist und frei von Verbindungsstegen ist und dazu bestimmt ist, mit einem Längselement überlagert zu werden, wobei das Ende dazu bestimmt ist, auf dem Längselement (15) ohne Montagenut überlagert zu werden.

9. Vorderfußverstärkungsteil (1) nach Anspruch 8, **dadurch gekennzeichnet, dass** es aus Stahl mit sehr hoher elastischer Grenze mit einer Bruchdehnung A von mindestens 6 %, gemessen nach ISO 6892-1:2016, und vorzugsweise einer mechanischen Festigkeit Rm von mindestens 1200 MPa, gemessen nach ISO 6892-1:2016, hergestellt ist.

10. Verwendung eines sehr hochnachgiebigen Stahls mit einer Reißdehnung A von mindestens 6 %, gemessen nach ISO 6892-1:2016, und einer mechanischen Festigkeit Rm von mindestens 1200 MPa, gemessen nach ISO 6892-1:2016, in einem Ziehverfahren zur Herstellung eines vorderen Fußverstärkungsteils (1) nach Anspruch 8 oder 9 oder zur Herstellung eines vorderen Fußverstärkungsteils (1) nach einer Fahrzeugstruktur. einen Hohlraum begrenzen, der zumindest teilweise durch Verbindungsstege begrenzt ist, wobei das vordere Fußverstärkungsteil (1) im Allgemeinen L-förmig ist, sodass es einen Teil aufweist, der dazu bestimmt ist, sich horizontal in Längsrichtung des Fahrzeugs zu erstrecken, in dem es montiert werden soll, wobei der horizontal verlaufende Teil ein halbkugelförmiges Ende aufweist und keine Verbindungsstege aufweist und dazu bestimmt ist, mit einem Längsträger überlagert zu werden, wobei das Ende dazu bestimmt ist, ohne Montagenut auf dem Längsträger (15) überlagert zu werden.

## Claims

1. A structure for a motor vehicle comprising a front foot reinforcement part (1) having a horizontal part intended to extend along the longitudinal direction of the vehicle, showing a semi-hemispherical end and a longitudinal member (15); the front foot reinforcement part (1) and the longitudinal member (15) each being in the form of a half-shell defining a cavity (3, 17), said part (1) and said longitudinal member (15) being superposed at one of their ends, said structure being **characterized in that** the end of the front foot reinforcement part (1) is superposed on the longitudinal member (15) is free of assembly rebate.

2. Vehicle structure according to claim 1, **characterized in that** the front foot reinforcement part (1) is fixed to the longitudinal member (15) by at least one fixing means (19, 23) arranged in the cavity (3) of said part (1) at its horizontal part.

3. Vehicle structure according to claim 2, the horizontal part of the cavity of the front foot reinforcement part (1) having a bottom and side walls (5, 7, 9), the structure is **characterized in that** said front foot reinforcement part (1) is fixed to the side member (15) by at least one fixing means (19) arranged at the bottom of said cavity (3) and/or by at least one fixing means (23) arranged on at least one side wall (5, 7, 9) of said cavity (3), preferably the fixing means (19) are arranged at the bottom of the cavity (3).

4. Vehicle structure according to one of Claims 2 or 3, **characterized in that** at least one of the fixing means (19, 23) is a welding point.

5. Vehicle structure according to one of claims 1 to 4, wherein the cavities (3, 17) of the front foot reinforcement part (1) and of the longitudinal member (15) are at least partially bordered by connecting webs (11, 21), the structure is **characterized in that** said part (1) and the longitudinal member (15) are arranged so that their respective connecting webs are arranged in continuity with one another in the longitudinal direction of the vehicle, preferably the connecting webs of the front foot reinforcement part (1) and the longitudinal member (15) show a distance from each other in the longitudinal direction.

6. Vehicle structure according to one of claims 1 to 5, **characterized in that** the front foot reinforcement part (1) is made of very high yield strength steel having a tensile elongation A of at least 6% as measured according to ISO 6892-1:2016, and preferably a mechanical strength Rm of at least 1200 MPa as measured according to ISO 6892-1:2016.

7. Vehicle **characterized in that** it comprises at least one vehicle structure according to one of Claims 1 to 6.

8. A front foot reinforcement part (1) in the form of a half-shell defining a cavity bordered at least in part by connecting webs, said front foot reinforcement part (1) being generally L-shaped so as to have a part intended to extend horizontally in the longitudinal direction of the vehicle in which it is intended to be mounted, **characterized in that** the horizontally extending part shows a semi-hemispherical end, and is devoid of connecting webs and is intended to be superposed with a longitudinal member, the end intended to be superposed on the longitudinal member (15) without assembly rebate.

9. Front foot reinforcement part (1) according to claim 8, **characterized in that** it is made of steel with very high elastic limit having an elongation at break A of at least 6% as measured according to ISO 6892-1:2016, and preferably a mechanical strength Rm of at least 1200 MPa as measured according to ISO 6892-1:2016.

10. Use of a very high yield strength steel having an elongation at break A of at least 6% as measured according to ISO 6892-1:2016, and a mechanical strength Rm of at least 1200 MPa as measured according to ISO 6892-1:2016, in a drawing process for the manufacture of a front foot reinforcement part (1) according to claim 8 or 9 or for the manufacture of a front foot reinforcement part (1) according to a vehicle structure One of claims 1 to 6; preferably the front foot reinforcement part (1) is in the form of a half-shell defining a cavity bordered at least in part by connecting webs, said front foot reinforcement part (1) being generally L-shaped so as to have a part intended to extend horizontally in the longitudinal direction of the vehicle in which it is intended to be mounted, the horizontally extending part showing a semi-hemispherical end and lacking connecting webs and intended to be superposed with a longitudinal member, the end intended to be superposed on the longitudinal member (15) without assembly rebate.
